# EUROPÄISCHE PATENTSCHRIFT

(11) **EP 1 295 749 B1**
(45) Veröffentlichungstag und Bekanntmachung des Hinweises auf die Patenterteilung: **28.02.2007**
(21) Anmeldenummer: 02020194.3
(22) Anmeldetag: 10.09.2002
(51) Int. Cl.: B60K 17/22

(54) **Antriebsachse**
Drive axle
Essieu d'entraînement

(30) Priorität: 14.09.2001 DE 10145282
(43) Veröffentlichungstag der Anmeldung: 26.03.2003
(73) Patentinhaber: ZF FRIEDRICHSHAFEN AG, 88038 Friedrichshafen (DE)
(72) Erfinder: Steuer, Heinz, 94113 Tiefenbach (DE); Rott, August, 94107 Untergriesbach (DE)

(56) Entgegenhaltungen:
- DE-U- 1 977 305
- US-A- 2 831 372
- PATENT ABSTRACTS OF JAPAN Bd. 007, Nr. 189 (M-237), 18. August 1983 (1983-08-18) -& JP 58 091963 A (ISUZU JIDOSHA KK), 1. Juni 1983 (1983-06-01)

## Beschreibung

Die Erfindung bezieht sich auf eine Antriebsachse nach der im Oberbegriff von Anspruch 1 näher definierten Art.

Antriebsachsen, an welche das Getriebegehäuse direkt angeflanscht ist, sind vorzugsweise bei Mobilbaggern und weiteren Arbeitsmaschinen bekannt. Das Getriebe ist häufig mit dem Achsgehäuse über ein Zwischengehäuse verbunden und treibt einerseits über ein Kegelgetriebe die Antriebsachse und andererseits, vorzugsweise über eine Kardanwelle, eine weitere, vorzugsweise gelenkte Antriebsachse an.

In dem Produkt-Datenblatt "ZF-Lastschaltgetriebe 2 HL 101 für hydrostatisch angetriebene Fahrzeuge" mit der Nr. ZP/Ty 14.03.95 d wird ein Getriebe offenbart, dessen Getriebegehäuse über ein Zwischengehäuse mit dem Achsgehäuse einer Antriebsachse verbunden ist. Die Ritzelwelle des Getriebes ist einerseits in dem Zwischengehäuse und andererseits in dem Getriebegehäuse gelagert und treibt über ein Kegelrad ein Differentialgetriebe an. Das Differentialgetriebe ist in dem Zwischengehäuse gelagert und treibt über Steckwellen die Radnaben an. Das Zwischengehäuse weist zwei Flansche auf, von welchem der erste Flansch mit dem Achsgehäuse und der zweite Flansch mit dem Getriebegehäuse verbunden ist. Im Servicefall, bei welchem das Getriebe von der Achse getrennt wird, sind die Radnabengetriebe und die mit ihnen verbundenen Steckwellen zu entfernen, um das Zwischengehäuse mit dem Differential von dem Achsgehäuse zu trennen. Dies stellt einen erheblichen Montage- und Kostenaufwand dar.

Die DE-197 730 54 offenbart eine Antriebsachse gemäß dem Oberbegriff des Anspruchs 1.

Der vorliegenden Erfindung liegt die Aufgabe zugrunde, eine Antriebsachse mit einem Achsgehäuse und ein mit ihr über ein Zwischengehäuse verbundenes Getriebe zu schaffen, welche sich im Servicefall ohne erhöhten Montageaufwand trennen lassen.

Die Aufgabe wird mit einer, auch die kennzeichnenden Merkmale des Hauptanspruchs aufweisenden, gattungsgemäßen Antriebsachse gelöst.

Erfindungsgemäß ist das Achsgehäuse der Antriebsachse über ein Zwischengehäuse mit dem Getriebegehäuse verbunden, wobei in dem Zwischengehäuse eine erste Lagerstelle für die Ritzelwelle angeordnet ist. Eine zweite Lagerstelle für die Ritzelwelle befindet sich in dem Getriebegehäuse. Die Lagerstellen des Differentials befinden sich im Achsgehäuse, wodurch das Differential im Achsgehäuse befestigt ist. Das Zwischengehäuse weist einen Flansch auf, welcher sich zwischen dem Achsgehäuse und dem Getriebegehäuse befindet und welcher, vorzugsweise über gemeinsame Verbindungselemente, das Achsgehäuse mit dem Getriebegehäuse verbindet. In einer weiteren variante weist der Flansch des Zwischengehäuses einerseits eine erste Zentrierfläche, durch welche der Flansch im Getriebegehäuse zentriert wird, und eine zweite Zentrierfläche auf, durch welche das Achsgehäuse im Zwischengehäuse zentriert wird. Somit ist gemäß dieser weiteren variante gewährleistet, daß das Achsgehäuse und somit das Tellerrad des Differentials positionsrichtig zur Ritzelwelle angeordnet ist. Indem die Lagerung des Differentials erfindungsgemäß im Achsgehäuse angeordnet ist, ist es bei der Trennung des Getriebegehäuses vom Achsgehäuse nicht notwendig, die Radnabengetriebe und die Steckwellen der Achse zu entfernen, da das Differential im Achsgehäuse verbleibt. Indem die Ritzelwelle einerseits im Zwischengehäuse und andererseits im Getriebegehäuse gelagert und das Zwischengehäuse im Getriebegehäuse zentriert ist, ist es bei einer Demontage der Antriebsachse vom Getriebe nicht notwendig, die Ritzelwelle ebenfalls zu demontieren und somit neu einzustellen. Durch Einengung der Fertigungstoleranzen ist es möglich, die Ritzelwelle und das Kegelrad nicht ausschließlich in gepaartem Zustand zu verwenden, wodurch bei einem Schaden an der Antriebsachse oder am Getriebe nur der beschädigte Teil ausgetauscht werden muß.

Weitere Vorteile sind der Figuren-Beschreibung zu entnehmen.

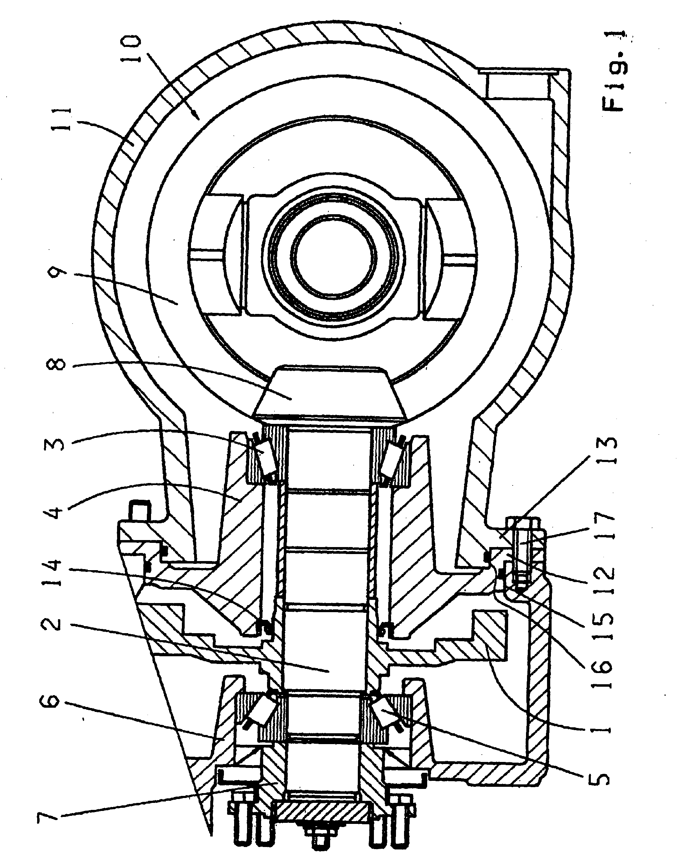

In der einzigen Figur ist ein Ausschnitt einer Antriebsachse mit einem Getriebe dargestellt, wobei ein Zahnrad 1 eine Ritzelwelle 2 antreibt, welche über eine erste Lagerung 3 im Zwischengehäuse 4 und über eine zweite Lagerung 5 im Getriebegehäuse 6 gelagert ist. Die Ritzelwelle treibt einerseits einen Abtriebsflansch 7 und andererseits über ihr Ritzel 8 ein Kegelrad 9 an. Das Kegelrad 9 ist mit einem nicht im Detail dargestellten Differential 10 verbunden. Das Differential 10 ist über nicht dargestellte Lagerungen im Achsgehäuse 11 gelagert. Das Zwischengehäuse 4 weist einen Flansch 12 auf, welcher zwischen einem Flansch 13 des Achsgehäuses 11 und dem Getriebegehäuse 6 angeordnet ist. Um das Schmiermittel des Getriebes vom Schmiermittel der Achse zu trennen, ist auf der Ritzelwelle 2 oder auf dem Zahnrad 1 ein Dichtmittel angeordnet, welches das Schmiermittel der Achse vom Schmiermittel des Getriebes trennt. Der Flansch 12 des Zwischengehäuses 4 weist eine erste Zentrierung 15, mittels welcher das Zwischengehäuse 4 im Getriebegehäuse 6 zentriert wird, und eine zweite Zentrierung 16 auf, über welche das Achsgehäuse 11 im Zwischenflansch 4 zentriert wird. Die Fertigungstoleranzen der Ritzelwelle 2 und des Ritzels 8 sowie des Tellerrades 9 und der mit diesen in Verbindung stehenden Teile ist dergestalt eingeschränkt, daß eine ausschließliche Verwendung von gepaarten Ritzeln 8 und Tellerrädern 9 nicht nötig ist. Das Achsgehäuse 11, das Zwischengehäuse 4 und das Getriebegehäuse 6 sind über Befestigungsmittel 17 verbunden. Vorzugsweise wird das Zwischengehäuse 4, das Achsgehäuse 11 und das Getriebegehäuse 6 über gemeinsame Befestigungsmittel 17 verbunden, es besteht jedoch auch die Möglichkeit, für die Verbindung des Zwischengehäuses 4 mit dem Getriebegehäuse 6 und für die Verbindung des Zwischengehäuses 4 mit dem Achsgehäuse 11 getrennte Befestigungsmittel zu verwenden.

### Bezugszeichen

- 1: Zahnrad
- 2: Ritzelwelle
- 3: erste Lagerung
- 4: Zwischengehäuse
- 5: zweite Lagerung
- 6: Getriebegehäuse
- 7: Abtriebsflansch
- 8: Ritzel
- 9: Kegelrad
- 10: Differential
- 11: Achsgehäuse
- 12: Flansch
- 13: Flansch
- 14: Dichtmittel
- 15: Zentrierung
- 16: Zentrierung
- 17: Befestigungsmittel

## Patentansprüche

1. Antriebsachse mit einem Achsgehäuse (11), welches über einen Flansch (12) eines Zwischengehäuses (4) mit dem Getriebegehäuse (6) verbunden ist, wobei das Zwischengehäuse (4) zwischen dem Achsgehäuse (11) und dem Getriebegehäuse (6) angeordnet ist, und einem Kegelradgetriebe (8, 9) mit einer Ritzelwelle (2) und einem Kegelrad (9), welches mit einem Differentialgetriebe (10) verbunden ist, wobei die Ritzelwelle (2) über eine erste Lagerung (3) in dem Zwischengehäuse (4) und über eine zweite Lagerung (5) in dem Getriebegehäuse (6) gelagert ist und der Flansch (12) einerseits am Achsgehäuse (11) und andererseits am Getriebegehäuse (6) anliegt, **dadurch gekennzeichnet, daß** das Differentialgetriebe (10) in dem Achsgehäuse (11) gelagert ist.

2. Antriebsachse nach Anspruch 1, **dadurch gekennzeichnet, daß** das Getriebegehäuse (6), das Achsgehäuse (11) und das Zwischengehäuse (2) über gemeinsame Verbindungselemente (17) miteinander verbunden sind.

3. Antriebsachse nach Anspruch 1, **dadurch gekennzeichnet, daß** ein Ritzel (8) der Ritzelwelle (2) und das Kegelrad (9) nicht ausschließlich gepaart verwendet werden.

4. Antriebsachse nach Anspruch 1, **dadurch gekennzeichnet, daß** die Ritzelwelle (2) durch ein Zahnrad (1) des Getriebes angetrieben wird und einerseits über ihr Ritzel (8) das Differential (10) und andererseits über einen mit der Ritzelwelle (2) verbundenen Flansch (7) antreibt.

## Claims

1. Input axle having an axle housing (11), which is connected by a flange (12) of an intermediate housing (4) to the transmission housing (6), wherein the intermediate housing (4) is disposed between the axle housing (11) and the transmission housing (6), and having a bevel gear drive (8, 9) with a pinion shaft (2) and a bevel gear (9), which is connected to a differential gear (10), wherein the pinion shaft (2) is mounted by a first bearing arrangement (3) in the intermediate housing (4) and by a second bearing arrangement (5) in the transmission housing (6) and the flange (12) lies on the one hand against the axle housing (11) and on the other hand against the transmission housing (6), **characterized in that** the differential gear (10) is mounted in the axle housing (11).

2. Input axle according to claim 1, **characterized in that** the transmission housing (6), the axle housing (11) and the intermediate housing (2) are connected to one another by common connection elements (17).

3. Input axle according to claim 1, **characterized in that** a pinion (8) of the pinion shaft (2) and the bevel gear (9) are not exclusively used in a paired manner.

4. Input axle according to claim 1, **characterized in that** the pinion shaft (2) is driven by a gear wheel (1) of the transmission and drives the differential (10) on the one hand via its pinion (8) and on the other hand via a flange (7) connected to the pinion shaft (2).

## Revendications

1. Essieu moteur comprenant un carter d'essieu (11) qui est relié au carter (6) de la boîte de vitesses par l'intermédiaire d'un flasque (12) appartenant à un carter intermédiaire (4), le carter intermédiaire (4) étant disposé entre le carter d'essieu (11) et le carter (6) de la boîte de vitesses, et comprenant un couple conique (8, 9) composé d'un arbre de pignon (2) et d'une couronne conique (9), laquelle est reliée à un différentiel (10), l'arbre de pignon (2) étant monté rotatif dans le carter intermédiaire (4) au moyen d'un premier palier (3) et dans le carter (6) de la boîte de vitesses au moyen d'un deuxième palier (5), et le flasque (12) étant appuyé, d'une part, contre le carter d'essieu (11) et, d'autre part, contre le carter (6) de la boîte de vitesses, **caractérisé en ce que** le différentiel (10) est monté rotatif dans le carter d'essieu (11).

2. Essieu moteur selon la revendication 1, **caractérisé en ce que** le carter (6) de la boîte de vitesses, le carter d'essieu (11) et le carter intermédiaire (4) sont assemblés entre eux par des éléments d'assemblage communs (17).

3. Essieu moteur selon la revendication 1, **caractérisé en ce qu'**un pignon (8) de l'arbre de pignon (2) et la couronne conique (9) ne sont pas utilisés exclusivement sous la forme d'éléments appairés.

4. Essieu moteur selon la revendication 1, **caractérisé en ce que** l'arbre de pignon (2) est entraîné par une roue dentée (1) de la boîte de vitesses et entraîne, d'une part, le différentiel (10) par l'intermédiaire de son pignon (8) et, d'autre part, un flasque (7) relié à l'arbre de pignon (2).
